# EUROPÄISCHE PATENTSCHRIFT

(11) **EP 2 316 002 B1**
(45) Veröffentlichungstag und Bekanntmachung des Hinweises auf die Patenterteilung: **04.05.2016**
(21) Anmeldenummer: 08785388.3
(22) Anmeldetag: 06.08.2008
(51) Int. Cl.: G01C 21/00, G01C 21/20, B61L 25/02, B61D 41/04, B61L 15/00

(54) **VERFAHREN UND MOBILES GERÄT ZUM AUFFINDEN EINER GEEIGNETEN EINSTIEGSZONE AN EINEM BAHNSTEIG**
METHOD AND MOBILE DEVICE FOR LOCATING A SUITABLE BOARDING ZONE ON A TRAIN PLATFORM
PROCÉDÉ ET APPAREIL MOBILE POUR TROUVER UNE ZONE D'EMBARQUEMENT APPROPRIÉE SUR UN QUAI

(43) Veröffentlichungstag der Anmeldung: 04.05.2011
(73) Patentinhaber: Unify GmbH & Co. KG, 81379 München (DE)
(72) Erfinder: BOZIONEK, Bruno, 33178 Borchen (DE); HANNA, Thomas, 32758 Detmold (DE); KUNTE, Klaus-Josef, 33178 Borchen (DE)
(74) Vertreter: Fritzsche, Thomas
(86) Internationale Anmeldenummer: PCT/EP2008/006470
(87) Internationale Veröffentlichungsnummer: WO 2010/015265

(56) Entgegenhaltungen:
- EP-A- 1 724 553
- DE-A1- 10 225 096
- DE-A1- 10 361 025
- DE-A1- 19 640 068
- GB-A- 2 378 541
- JP-A- 2006 018 573

## Beschreibung

Die Erfindung betrifft ein Verfahren zum Auffinden einer geeigneten Einstiegszone an einem Bahnsteig gemäß dem Oberbegriff des Patentanspruchs 1, und ein mobiles Gerät zum Auffinden einer geeigneten Einstiegszone an einem Bahnsteig gemäß dem Oberbegriff des Patentanspruchs 7.

JP 2006 018573 A offenbart ein Zielführungsverfahren und - system mit einem mobilen Gerät zum Auffinden eines für einen Benutzer reservierten Sitzplatzes. Dabei wird das mobile Gerät, das von dem Benutzer mitgeführt wird, wiederholt lokalisiert, und aus der Position des mobilen Geräts und einer von einem Reservierungsverwaltungsdienst mitgeteilten Position des reservierten Sitzplatzes wird durch einen Routensuchdienst eine Route errechnet, die beispielsweise in Form von Kartendaten oder von akustischen Navigations-Hinweisen an das mobile Gerät übertragen und dort angezeigt wird.

Die DE 196 40 068 A1 und die EP 1 724 553 A1 offenbaren jeweils mobile Navigationsgeräte, die mittels Funk die Position des Benutzers bestimmen und eine Route zu einem Ziel ausgeben. ¶ ¶

Bei der Verwendung öffentlicher Verkehrsmittel, insbesondere von Fernverkehrszügen, ist es üblich, vor Fahrtantritt einen Sitzplatz zu reservieren, wobei üblicherweise bei oder nach der Reservierung des Sitzplatzes dem Benutzer (Fahrgast) mitgeteilt wird, in welchem Wagen (Wagon) des zu benutzenden Zuges sich dieser Sitzplatz befindet. Damit soll es dem Benutzer ermöglicht werden, in den richtigen Wagon einzusteigen und sich dazu rechtzeitig an einer geeigneten Stelle des Bahnsteiges einzufinden, um eine umständliche Suche des reservierten Sitzplatzes innerhalb des Zuges zu vermeiden oder zumindest zu verkürzen. Zu diesem Zweck sind an Bahnsteigen häufig sogenannte "Wagenstands-Anzeiger" ausgehangen, an denen der Benutzer anhand der Zugnummer und anhand der ihm mitgeteilten Wagen-Nummer eine Einstiegszone (meist mit einem Buchstaben gekennzeichnet) herausfindet, wobei der Benutzer dann anhand von entlang dem Bahnsteig angebrachten Tafeln, die die entsprechenden Einstiegszonen kennzeichnen, die voraussichtlich geeignete Einstiegszone aufsuchen kann.

An dem beschriebenen Verfahren zum Auffinden einer geeigneten Einstiegszone hat sich als nachteilig erwiesen, dass häufig Züge nicht gemäß der an dem "Wagenstands-Anzeiger" gezeigten Standard-Konfiguration zusammengestellt sind, sondern Wagons hinsichtlich ihrer Anordnung in dem Zug miteinander vertauscht sind, Züge in umgekehrter Richtung in dem Bahnhof einfahren, Züge an einem geänderten Bahnsteig einfahren (an dem kein zugeordneter Wagestands-Anzeiger verfügbar ist), etc.. In diesen Fällen werden oftmals nur kurz vor oder nach der Einfahrt des Zuges die geänderten Einstiegszonen per Lautsprecher-Durchsage bekannt gegeben, was aufgrund der akustischen Gegebenheiten auf Bahnhöfen oftmals schwer verständlich ist und zu Irritationen bei den Fahrgästen führt. Ein weiteres Problem besteht darin, dass häufig an unterschiedlichen Wochentagen auch unterschiedliche Zug-Zusammensetzungen angeboten werden, beispielsweise in den Fällen, in denen am Wochenende nur verkürzte Züge verkehren. Dies ist durch die bekannten "Schaukästen" mit den Wagenstands-Anzeigern schlecht vermittelbar.

Es ist daher eine Aufgabe der vorliegenden Erfindung, das Auffinden einer geeigneten Einstiegszone an einem Bahnsteig zu erleichtern und darüber hinaus eine flexible Anpassung an geänderte Schienenfahrzeug-Konfigurationen zu ermöglichen.

Die Aufgabe wird durch ein Verfahren gemäß dem Patentanspruch 1 und durch ein mobiles Gerät gemäß dem Patentanspruch 7 gelöst.

Die Erfindung macht sich dabei zu Nutze, dass viele Benutzer öffentlicher Verkehrsmittel bereits ohnehin mobile Geräte, beispielsweise Mobiltelefone, Laptop-Computer, PDA's etc. mit sich führen, welche für eine funkbasierte Datenkommunikation eingerichtet sind und welche sich mit einer entsprechenden Funk-Infrastruktur lokalisieren lassen. Durch einen zentralen Dienst, welcher sowohl über die Reservierungsdaten als auch über die Daten der aktuellen Zug-Konfiguration verfügt, ist es im Zusammenhang mit den Positionsdaten für das mobile Gerät (und damit für den Benutzer) möglich, dem Benutzer Anweisungen vorzuschlagen, in welche Richtung er sich bewegen sollte, um den am besten geeigneten Einstieg bzw. die am besten geeignete Einstiegszone für das zu benutzende Schienenfahrzeug (Zug) zu erreichen. Insbesondere wird dabei ein Verfahren zum Auffinden einer geeigneten Einstiegszone aus einer Mehrzahl an Einstiegszonen eines Schienenfahrzeuges an einem Bahnsteig vorgeschlagen, wobei auf einem mobilen Gerät des Benutzers ein Dienst zur Ausgabe von Navigations-Anweisungen eingerichtet wird. Dabei wird das mobile Gerät im Bereich des Bahnsteiges wiederholt lokalisiert, wobei durch einen zentralen Dienst jeweils aus der Position des mobilen Gerätes und der tatsächlichen Halteposition eines Wagons mit dem reservierten Sitzplatz eine geeignete Einstiegszone derart bestimmt, dass ein bezogen auf den reservierten Sitzplatz (RS) nächstliegender Einstieg des Schienenfahrzeuges (SFZ) im Bereich der geeigneten Einstiegszone (EZ) liegt oder liegen wird, und ein Navigationshinweis für den Benutzer dorthin errechnet, zu dem mobilen Gerät übertragen und von diesem ausgegeben wird.

Dadurch kann der Fahrgast (Benutzer) schon vor, während oder auch nach Einfahrt des Zuges so geleitet werden, dass er mit höchstmöglichem Komfort seinen reservierten Sitzplatz erreicht. Ein derartiges Verfahren kann dabei sogar "dynamisch" auf Änderungen hinsichtlich der Zug-Konfiguration oder Gleis und sogar auf Änderungen des reservierten Sitzplatzes reagieren.

Die Lösung der Aufgabe sieht weiterhin ein mobiles Gerät zum Auffinden einer geeigneten Einstiegszone mit einer drahtlosen Kommunikationseinrichtung zum Datenaustausch mit zumindest einer Funk-Basisstation und mit einem Ausgabemittel für zumindest ein Navigations-Hinweis vor, wobei das mobile Gerät zur Ausführung der dem mobilen Gerät zugewiesenen Schritte eines der vorstehenden Verfahren eingerichtet ist. Ein solches Gerät ist geeignet, im Zusammenspiel mit der ortsfesten Infrastruktur an einem Bahnsteig eine sichere und komfortable Orientierungshilfe für einen Fahrgast zu bieten.

Vorteilhafte Ausgestaltungen des erfindungsgemäßen Verfahrens sind in den abhängigen Patentansprüchen angegeben. Die dabei beschriebenen Merkmale und Vorteile gelten sinngemäß auch für das erfindungsgemäße mobile Gerät.

Es ist wesentlich für die Funktion des vorstehend beschriebenen Verfahrens, dass die Lokalisierung des Benutzers (Fahrgastes) im Umfeld des Bahnsteiges mit einer bezogen auf die Längsachse des Zuges hinreichenden Genauigkeit erfolgt, so dass auch für Fußgänger hinreichend präzise Navigations-Hinweise ausgegeben werden können. Dazu wird vorteilhaft für die Lokalisierung ein Kurzstreckenfunksystem verwendet, beispielsweise auf Basis der RFID-Technologie, ZigBee (IEEE 802.15.4), DECT (Digital enhanced cordless telephony), WLAN, Bluetooth, oder basiert auf einem anderen Funkstandard. Insbesondere in den Fällen, in denen die an einer Basisstation empfangene Funkfeldstärke für eine Lokalisierung des mobilen Gerätes eingesetzt wird, ist es von Vorteil, mindestens zwei oder mehr ortsverschieden installierte Funkbasisstationen zur Erfassung der Funkfeldstärke einer Aussendung des mobilen Gerätes heranzuziehen, wobei die Werte der empfangenen Funkfeldstärken miteinander in Relation gesetzt werden können, um zu einer präzisen Lokalisierung zu gelangen.

Gebräuchliche mobile Geräte können eingesetzt und somit die Entwicklung separater, dedizierter Hardware vermieden werden, wenn als das mobile Gerät ein Mobiltelefon oder ein mobiler Computer, der bereits zum funkbasierten Datenaustausch eingerichtet ist, verwendet wird. Die genannten Geräte bieten außerdem den Vorteil, dass sie bereits über entsprechende Benutzerschnittstellen, wie z.B. Anzeigevorrichtung, Lautsprecher etc., zur Ausgabe der Navigations-Hinweise verfügen. Insbesondere bei solchen mobilen Geräten, die bereits für den paketorientierten Datenaustausch (Internet-Protokoll) eingerichtet sind, wird für die Übermittlung der Navigations-Anweisungen bzw. Navigations-Hinweise zu dem mobilen Gerät hin vorteilhaft das SIP-Protokoll (RFC 3261) verwendet, wobei zusammen mit der Einrichtung des lokalen Dienstes auf dem mobilen Gerät dieses mit einer SIP-Protokollerweiterung zur Ausgabe der Navigations-Hinweise bzw. Navigations-Anweisungen ausgestattet wird.

Auf eine Erfassung der Ausrichtung des mobilen Gerätes im Sinne einer Himmelsrichtung kann verzichtet werden, indem auf einem Display des mobilen Gerätes schematisch der Bahnsteig und ein Symbol für die eigene Position angezeigt wird, wobei die Navigations-Hinweise jeweils eine Bewegungsrichtung in Relation zu dem dargestellten Standort vorschlagen. In den Fällen, in denen das nicht möglich ist, beispielsweise bei einer Sprachausgabe, kann dagegen per Konvention davon ausgegangen werden, dass der Benutzer in Richtung des Bahnsteiges bzw. in Richtung des bereits eingefahrenen Zuges blickt. Alternativ können die Hinweise auch mit Ergänzungen, wie z.B. "Ihr Einstiegsort befindet sich 50m in Fahrtrichtung des Zuges" o.ä., ausgegeben werden.

Ausführungsbeispiele des erfindungsgemäßen Verfahrens werden nachfolgend anhand der Zeichnungen erläutert. Sie dienen gleichzeitig der Erläuterung eines erfindungsgemäßen mobilen Gerätes.

Dabei zeigt die einzige Figur schematisch ein mobiles Gerät (hier: Mobiltelefon), an dem mittels einer graphischen Anzeigevorrichtung ein Navigations-Hinweis ausgegeben wird.

Für das nachfolgend geschilderte Ausführungsbeispiel wird davon ausgegangen, dass ein Benutzer sich auf einem Bahnsteig in Höhe der Zone "A" aufhält und einen Sitzplatz RS in einem Zug SFZ (Schienenfahrzeug) reserviert hat, wobei dieser reservierte Sitzplatz RS im vorderen Teil des Zuges SFZ angeordnet ist und wobei der bezogen auf diesen Sitzplatz RS nächstliegende Einstieg des Zuges SFZ im Bereich der Einstiegszone C liegen wird. Bei der Reservierung hat der Benutzer die Rufnummer seines Mobiltelefons bekannt gegeben, welches hierbei als das mobile Gerät MG verwendet werden soll. Im Reservierungssystem des Schienenverkehr-Anbieters sind in verschiedenen Datenbanken sowohl der reservierte Sitzplatz (Sitznummer) RS als auch die damit verknüpfte Wagen-Nummer (Wagon-Nummer) verzeichnet. Ebenfalls in Datenbanken ist die aktuelle Zug-Konfiguration des Schienenfahrzeuges SFZ verzeichnet, d.h. die Information darüber, an welcher Stelle im Bezug auf die Längsachse des Schienenfahrzeuges SFZ der fragliche Zug-Wagen angeordnet ist. Weitere Datenbank-Einträge betreffen die Einfahrtrichtung des Schienenfahrzeuges SFZ in den hier betroffenen Bahnhof bzw. Bahnsteig BS und die Lage der dort ausgewiesenen Einstiegszonen EZ. Auf die vorgenannten Informationen hat ein (hier nicht dargestellter) zentraler Dienst Zugriff, der die Erstellung und Ausgabe der Navigations-Hinweise für den Benutzer koordiniert.

Rechtzeitig vor Einfahrt des Schienenfahrzeuges SFZ in den Bahnsteig BS wird ein lokaler Dienst auf dem mobilen Gerät MG installiert und aktiviert, was im Allgemeinen durch das Übertragen einer geeigneten Software und Start derselben geschieht. Im vorliegenden Ausführungsbeispiel handelt es sich bei dem mobilen Gerät MG um ein mobiles Telefon, welches zur Kommunikation gemäß dem SIP-Standard eingerichtet ist. Der zentrale Dienst überträgt mittels der bei der Reservierung angegebenen Rufnummer eine ausführbare Datei auf das mobile Gerät MG, durch die der dort vorhandene SIP-Protokollstack um die im Folgenden benötigte Funktionalität eines lokalen Dienstes erweitert wird. Dieser Vorgang muss für jeden Benutzer bzw. für jedes verwendete mobile Gerät MG nur einmalig vorgenommen werden.

Bei Ankunft des Benutzers an dem Bahnsteig führt dieser an seinem mobilen Gerät MG eine Funktion aus, die die Übermittlung eines sog. "Subscribe"-Befehls an den zentralen Dienst bewirkt. Ein solcher Befehl ist im Folgenden schematisch dargestellt, wobei von den in der vorletzten Zeile aufgezeigten Optionen "enable" bzw. "disable" zum Start der Navigierungs-Sitzung die "enable"-Variante gewählt wird, und zum Ende der Sitzung entsprechend die "disable"-Variante: 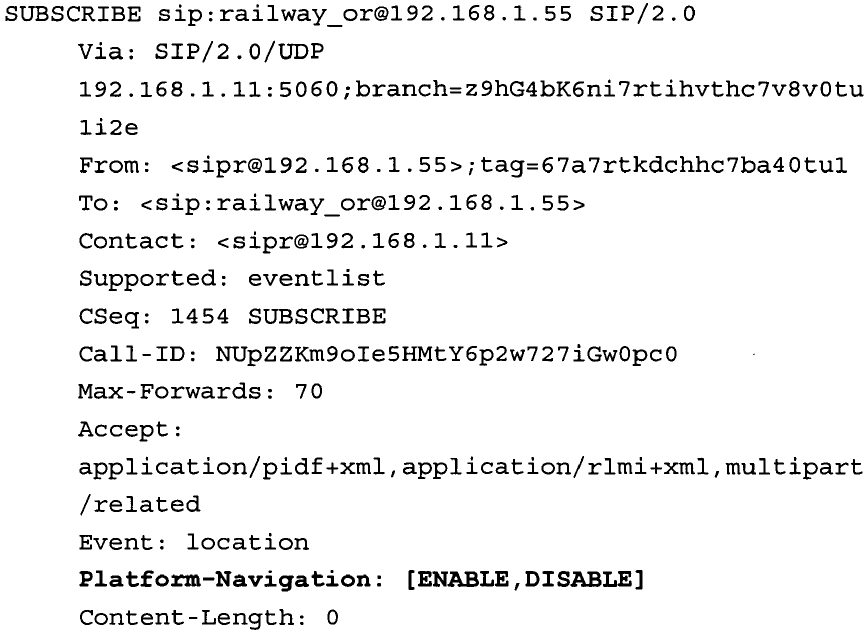 Der zentrale Dienst empfängt die "enable"-Nachricht und startet die wiederholte Positionserfassung für das mobile Gerät MG. Dazu werden die in der "Subscribe"-Nachricht enthaltenen Identifizierungsmerkmale des mobilen Gerätes MG (beispielsweise IP-Adresse, Rufnummer etc.) an die Funk-Basisstationen entlang des Bahnsteiges BS, an dem der Fahrgast (Benutzer) zusteigen soll, übermittelt mit der Aufforderung, die entsprechenden empfangenen Funkfeldstärken von Aussendungen des mobilen Gerätes MG zu erfassen und an den zentralen Dienst weiterzuleiten. In den Fällen, in denen das mobile Gerät MG nicht ohnehin in regelmäßigen Zeitabständen Aussendungen vornimmt, werden in regelmäßigen Zeitabständen Test-Datenpakete zu dem mobilen Gerät MG ausgesendet, um dieses zur Aussendung sogenannter "Quittierungsmeldungen" anzuregen und um somit zu weiteren Messwerten für die empfangenen Funkfeldstärken zu gelangen. Die erfassten und an den zentralen Dienst gemeldeten Werte werden dort miteinander in Bezug gesetzt, um mit einem Triangulationsverfahren den jeweiligen Standort S des mobilen Gerätes MG zu erfassen. Alternativ zu dem hier aufgezeigten Verfahren mittels Erfassung der Funkfeldstärken können beliebige andere Verfahren zur Standortbestimmung verwendet werden, beispielsweise Signallaufzeit-Verfahren, Satelliten-Navigation, optische Verfahren oder Kombinationen daraus. Aus den Werten für den Standort S und die anhand der Reservierungsinformation bestimmte Einstiegszone EZ (hier: Zone "C") wird nun ein Navigations-Hinweis NH errechnet und zu dem mobilen Gerät MG zur Ausgabe übermittelt. Im vorliegenden Ausführungsbeispiel wird dazu ebenfalls eine Nachricht mittels des SIP-Protokolls (diesmal in Richtung des mobilen Gerätes MG) versendet, die den nachfolgend skizzierten Aufbau hat:

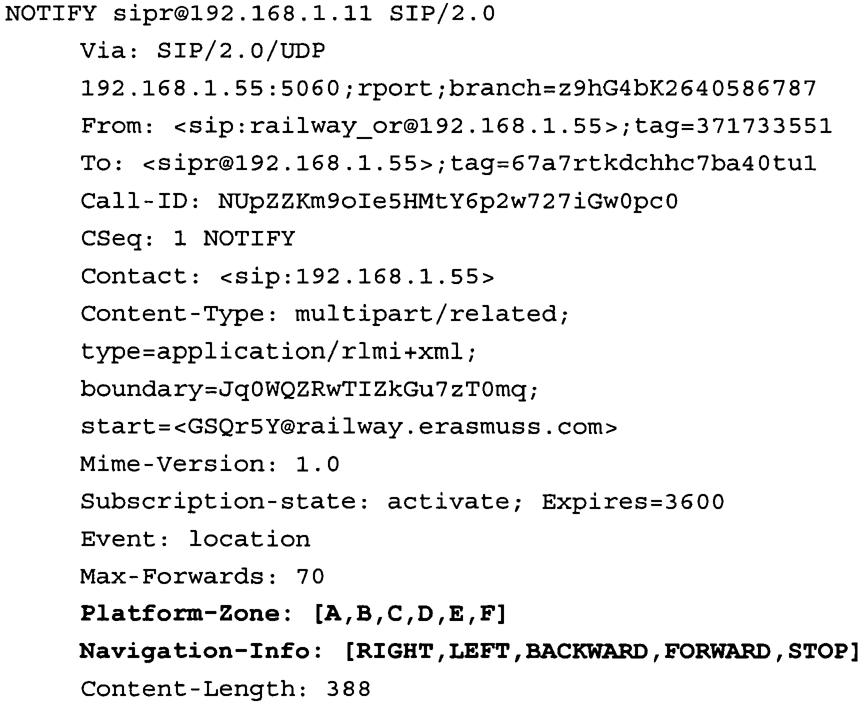

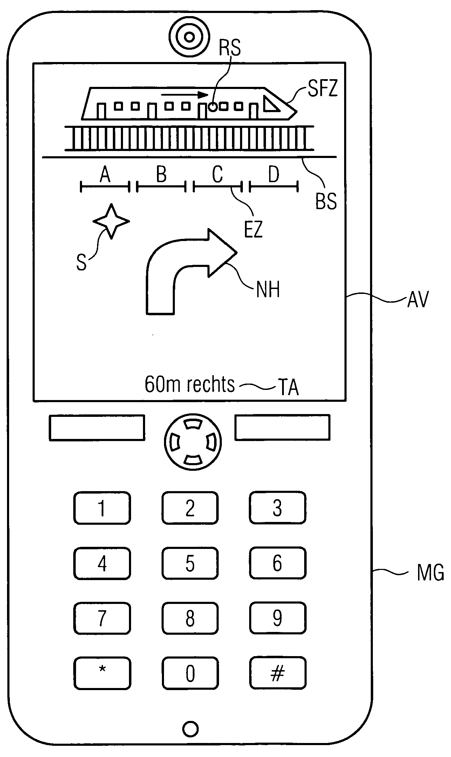

Von den in der drittletzten und der vorletzten Zeile aufgezählten Alternativen (A ... F; Right ... Stop) wird dabei selbstverständlich jeweils nur eine Alternative gewählt und übertragen. Mittels der zuvor auf das mobile Gerät MG übertragenen Software wird anhand der derart übermittelten Informationen eine graphische Ausgabe aufbereitet, wie sie in der Figur 1 auf der Anzeigevorrichtung AV gezeigt ist. Neben der schematischen Darstellung des Schienenfahrzeuges SFZ, des reservierten Sitzplatzes RS, des Bahnsteiges BS und der Einstiegszonen EZ wird dabei der derzeitige Standort S schematisch dargestellt. Der Navigations-Hinweis NH wird hier mittels einer Pfeildarstellung ausgegeben und zusätzlich durch eine Textanzeige TA. Selbstverständlich kann alternativ oder zusätzlich auch eine Sprachnachricht ausgegeben werden, wobei sich dies insbesondere für solche mobile Geräte MG anbietet, die zur graphischen Ausgabe weniger geeignet sind. In einem solchen Fall kann anstelle der zuvor beschriebene SIP-Nachricht "Notify" auch eine Audio-Nachricht generiert und mittels einer "normalen" Sprach-Kommunikationsverbindung übertragen werden. Eine weitere Alternative bietet auch die Übertragung der Navigations-Hinweise mittels SMS-Kurznachrichten.

Mit jeder weiteren Positionsbestimmung des Standortes S des Gerätes MG kann dieser Vorgang wiederholt werden - zumindest in den Fällen, in denen sich der Standort S oder die Einstiegszone EZ gegenüber der vorhergehenden Berechnung geändert hat. Selbstverständlich können auch kurzfristige Änderungen der Konfiguration des Schienenfahrzeuges SFZ, des reservierten Sitzplatzes, des verwendeten Gleises etc. berücksichtigt werden.

## Patentansprüche

1. Verfahren zum Auffinden einer geeigneten Einstiegszone (EZ) aus einer Mehrzahl an Einstiegszonen (EZ) für ein Schienenfahrzeug (SFZ) an einem Bahnsteig (BS),
wobei für einen Benutzer ein Sitzplatz (RS) in dem Schienenfahrzeug reserviert ist, und
wobei dem reservierten Sitzplatz (RS) zumindest eine geeignete Einstiegszone (EZ) zugeordnet ist,
wobei
- auf einem mobilen Gerät (MG) des Benutzers ein lokaler Dienst zur Ausgabe von Navigations-Hinweisen (NH) eingerichtet wird,
- das mobile Gerät (MG) im Bereich des Bahnsteiges (BS) wiederholt lokalisiert wird, und
- durch einen zentralen Dienst jeweils aus der Position des mobilen Gerätes (MG) und der tatsächlichen Halteposition eines Wagons des Schienenfahrzeugs (SFZ) mit dem reservierten Sitzplatz eine geeignete Einstiegszone (EZ) derart bestimmt wird, dass ein bezogen auf den reservierten Sitzplatz (RS) nächstliegender Einstieg des Schienenfahrzeuges (SFZ) im Bereich der geeigneten Einstiegszone (EZ) liegen wird, und ein Navigations-Hinweis (NH) für den Benutzer zu der geeigneten Einstiegszone (EZ) hin errechnet, zu dem mobilen Gerät (MG) übertragen und von diesem ausgegeben wird.

2. Verfahren nach Patentanspruch 1,
wobei für die Lokalisierung ein Kurzstreckenfunksystem verwendet wird.

3. Verfahren nach einem der vorhergehenden Patentansprüche,
wobei für die Lokalisierung die Funkfeldstärke von Aussendungen des mobilen Gerätes (MG) an zumindest zwei ortsverschieden installierten Funk-Basisstationen erfasst wird.

4. Verfahren nach einem der vorhergehenden Patentansprüche,
wobei als das mobile Gerät (MG) ein Mobiltelefon oder ein mobiler Computer, der zum funkbasierten Datenaustausch eingerichtet ist, verwendet wird.

5. Verfahren nach einem der vorhergehenden Patentansprüche,
wobei für die Übermittlung der Navigations-Hinweise (NH) zu dem mobilen Gerät (MG) das SIP-Protokoll verwendet wird, wobei durch die Einrichtung des lokalen Dienstes auf dem mobilen Gerät (MG) dieses mit einer SIP-Protokollerweiterung zur Ausgabe der Navigations-Hinweise (NH) ausgestattet wird.

6. Verfahren nach einem der vorhergehenden Patentansprüche,
wobei auf einem Display des mobilen Gerätes (MG) schematisch der Bahnsteig (BS) und ein Symbol für die eigene Position angezeigt wird, wobei die Navigations-Hinweise (NH) jeweils eine Bewegungsrichtung in Relation zu dem dargestellten Standort vorschlagen.

7. System aus einem zentralen Dienst und einem mobilen Gerät (MG) zum Auffinden einer geeigneten Einstiegszone aus einer Mehrzahl an Einstiegszonen (EZ) für ein Schienenfahrzeug (SFZ) an einem Bahnsteig,
wobei für einen Benutzer ein Sitzplatz (RS) in dem Schienenfahrzeug reserviert ist, und
wobei dem reservierten Sitzplatz (RS) zumindest eine geeignete Einstiegszone (EZ) zugeordnet ist,
wobei das mobile Gerät (MG) des Benutzers ein Ausgabemittel für zumindest einen Navigations-Hinweis (NH) umfasst,
wobei
- das mobile Gerät (MG) eingerichtet ist, auf dem mobilen Gerät (MG) einen lokalen Dienst zur Ausgabe von Navigations-Hinweisen (NH) einzurichten und das mobile Gerät (MG) im Bereich des Bahnsteiges (BS) wiederholt zu lokalisieren, und
- der zentrale Dienst eingerichtet ist, jeweils aus der Position des mobilen Gerätes (MG) und der tatsächlichen Halteposition eines Wagons des Schienenfahrzeugs (SFZ) mit dem reservierten Sitzplatz eine geeignete Einstiegszone (EZ) derart zu bestimmen, dass ein bezogen auf den reservierten Sitzplatz (RS) nächstliegender Einstieg des Schienenfahrzeuges (SFZ) im Bereich der geeigneten Einstiegszone (EZ) liegen wird, einen Navigations-Hinweis (NH) für den Benutzer zu der geeigneten Einstiegszone (EZ) hin zu errechnen, und zu dem mobilen Gerät (MG) zu übertragen , und das mobile Gerät (MG) so eingerichtet ist, dass es den Navigations-Hinweis (NH) ausgibt.

8. System nach Patentanspruch 7,
wobei das mobile Gerät (MG) eine drahtlose Kommunikationseinrichtung zum Datenaustausch mit zumindest einer Funk-Basisstation umfasst.

9. System nach Patentanspruch 7 oder 8,
wobei für die Lokalisierung ein Kurzstreckenfunksystem vorgesehen ist.

10. System nach einem der Patentansprüche 7 bis 9,
wobei das mobile Gerät (MG) eingerichtet ist, Aussendungen vorzunehmen, die an zumindest zwei ortsverschieden installierten Funk-Basisstationen erfassbar sind.

11. System nach Patentanspruch 10,
wobei das mobile Gerät (MG) eingerichtet ist, die Aussendungen regelmäßig und selbsttätig vorzunehmen.

12. System nach Patentanspruch 10,
wobei das mobile Gerät (MG) eingerichtet ist, auf Empfang eines Test-Datenpakets die Aussendung einer Quittierungsmeldung vorzunehmen.

13. System nach einem der Patentansprüche 7 bis 12,
wobei das mobile Gerät (MG) ein Mobiltelefon oder ein mobiler Computer, der zum funkbasierten Datenaustausch eingerichtet ist, ist.

14. System nach einem der Patentansprüche 7 bis 13,
wobei für den Empfang der Navigations-Hinweise (NH) zu dem mobilen Gerät (MG) das SIP-Protokoll vorgesehen ist, wobei durch die Einrichtung des lokalen Dienstes auf dem mobilen Gerät (MG) dieses mit einer SIP-Protokollerweiterung zur Ausgabe der Navigations-Hinweise (NH) ausgestattet ist.

15. System nach einem der Patentansprüche 7 bis 14,
wobei auf einem Display des mobilen Gerätes (MG) schematisch der Bahnsteig (BS) und ein Symbol für die eigene Position angezeigt ist, wobei die Navigations-Hinweise (NH) jeweils eine Bewegungsrichtung in Relation zu dem dargestellten Standort (S) vorschlagen.

## Claims

1. Method for locating a suitable boarding zone (EZ) from a plurality of boarding zones (EZ) for a rail vehicle (SFZ) on a train platform (BS),
wherein, for a user, a seat (RS) is reserved in the train vehicle, and
wherein at least one suitable boarding zone (EZ) is associated with the reserved seat (RS),
wherein
- on a mobile apparatus (MG) of the user, a local service for outputting navigation instructions (NH) is installed,
- the mobile apparatus (MG) is repeatedly localized in the region of the train platform (BS), and
- by means of a central service, in each case from the position of the mobile apparatus (MG) and the actual stopping position of a rail car of the train vehicle (SFZ) with the reserved seat, a suitable boarding zone (EZ) is determined so that a closest boarding zone of the train vehicle (SFZ) relative to the reserved seat (RS) will be located in the region of the appropriate boarding zone (EZ), and a navigation instruction (NH) to the suitable boarding zone (EZ) is calculated for the user, transmitted to the mobile apparatus (MG), and output by the latter.

2. Method according to Claim 1,
wherein a short-distance radio system is used for the localizing.

3. Method according to any one of the preceding claims,
wherein for the localizing, the radio field strength of transmissions of the mobile apparatus (MG) is acquired at at least two radio base stations installed at different sites.

4. Method according to any one of the preceding claims,
wherein, as the mobile apparatus (MG), a mobile telephone or a mobile computer which is set up for radio-based data exchange is used.

5. Method according to any one of the preceding claims,
wherein, for the transmission of the navigation instructions (NH) to the mobile apparatus (MG), the SIP protocol is used, wherein, due to the setup of the local service on the mobile apparatus (MG), this apparatus is provided with a SIP protocol extension for outputting the navigation instructions (NH).

6. Method according to any one of the preceding claims,
wherein, on a display of the mobile apparatus (MG), the train platform (BS) is represented diagrammatically and a symbol for one's own position is displayed, wherein the navigation instructions (NH) in each case propose a direction of movement in relation to the represented location.

7. System on a central service and on a mobile apparatus (MG) for locating a suitable boarding zone from among a plurality of boarding zones (EZ) for a train vehicle (SFZ) on a train platform,
wherein, for a user, a seat (RS) in the train vehicle is reserved, and
wherein at least one suitable boarding zone (EZ) is associated with the reserved seat (RS),
wherein the mobile apparatus (MG) of the user comprises an output means for the at least one navigation instruction (NH),
wherein
- the mobile apparatus (MG) is set up so as to set up, on the mobile apparatus (MG), a local service for outputting navigation instructions (NH) and for repeatedly localizing the mobile apparatus (MG) in the region of the train platform (BS), and
- the central service is set up so as to determine, in each case from the position of the mobile apparatus (MG) and the actual stopping position of a rail car of the train vehicle (SFZ) with the reserved seat, a suitable boarding zone (EZ) so that a closest boarding zone of the train vehicle (SFZ) relative to the reserved seat (RS) will be located in the region of the appropriate boarding zone (EZ), a navigation instruction (NH) for the suitable boarding zone (EZ) is calculated for the user and transmitted to the user, and the mobile apparatus (MG) is set up so that it outputs the navigation instruction (NH).

8. System according to Claim 7,
wherein the mobile apparatus (MG) comprises a wireless communication device for data exchange with at least one radio base station.

9. System according to Claim 7 or 8,
wherein a short-distance radio system is provided for the localizing.

10. System according to any one of Claims 7 to 9,
wherein the mobile apparatus (MG) is set up in order to carry out transmissions that can be acquired at at least two radio base stations installed at different sites.

11. System according to Claim 10,
wherein the mobile apparatus (MG) is set up in order to carry out transmissions regularly and automatically.

12. System according to Claim 10,
wherein the mobile apparatus (MG) is set up in order to carry out the transmission of an acknowledgment message upon receipt of a test data packet.

13. System according to any one of Claims 7 to 12,
wherein the mobile apparatus (MG) is a mobile telephone or a mobile computer which is set up for radio-based data exchange.

14. System according to any one of Claims 7 to 13,
wherein, for the reception of the navigation instructions (NH) to the mobile apparatus (MG), the SIP protocol is provided, wherein, due to the setup of the local service on the mobile apparatus (MG), this apparatus is equipped with a SIP protocol extension for outputting the navigation instructions (NH).

15. System according to any one of Claims 7 to 14,
wherein, on a display of the mobile apparatus (MG), the train platform (BS) is represented diagrammatically, and a symbol for one's own position is displayed, wherein the navigation instructions (NH) in each case propose a direction of movement in relation to the represented location (S).

## Revendications

1. Procédé servant à trouver une zone d'embarquement (ZE) appropriée parmi une pluralité de zones d'embarquement (ZE) pour un véhicule sur rails (VSR) sur un quai (QU),
sachant qu'un siège (SR) est réservé dans le véhicule sur rails pour un usager, et
sachant qu'au moins une zone d'embarquement (ZE) appropriée est associée au siège (SR) réservé,
sachant
- qu'un service local servant à délivrer des informations de navigation (IN) est configuré sur un appareil mobile (AM) de l'usager,
- que l'appareil mobile (AM) est localisé de manière répétée dans le secteur du quai (QU), et
- qu'une zone d'embarquement (ZE) appropriée est déterminée par un service central respectivement à partir de la position de l'appareil mobile (AM) et de la position de stationnement réelle d'un wagon du véhicule sur rails (VSR) avec le siège réservé de telle manière qu'un accès au véhicule sur rails (VSR) le plus à proximité du siège (SR) réservé se trouvera dans le secteur de la zone d'embarquement (ZE) appropriée, et une information de navigation (IN) menant à la zone d'embarquement (ZE) appropriée est calculée à l'attention de l'usager, est transmise à l'appareil mobile (AM) et est délivrée par celui-ci.

2. Procédé selon la revendication 1,
sachant qu'un système radio à courtes distances est utilisé pour la localisation.

3. Procédé selon l'une quelconque des revendications précédentes,
sachant que l'intensité du champ radio des envois de l'appareil mobile (AM) est saisie, en vue de la localisation, au niveau au moins de deux stations de base radio installées à des emplacements différents.

4. Procédé selon l'une quelconque des revendications précédentes,
sachant qu'un téléphone mobile ou un ordinateur portable, qui est configuré afin d'échanger des données par communication radio, est utilisé en tant qu'appareil mobile (AM).

5. Procédé selon l'une quelconque des revendications précédentes,
sachant que le protocole SIP est utilisé en vue du transfert des informations de navigation (IN) à l'appareil mobile (AM), sachant que, du fait de la configuration du service local sur l'appareil mobile (AM), celui-ci est équipé d'une extension de protocole SIP afin de délivrer les informations de navigation (IN).

6. Procédé selon l'une quelconque des revendications précédentes,
sachant que le quai (QU) et un symbole de la position propre sont affichés de manière schématique sur un écran de l'appareil mobile (AM), sachant que les informations de navigation (IN) proposent respectivement une direction de déplacement en lien avec le site représenté.

7. Système composé d'un service local et d'un appareil mobile (AM) servant à trouver une zone d'embarquement appropriée parmi une pluralité de zones d'embarquement (ZE) pour un véhicule sur rails (VSR) sur un quai,
sachant qu'un siège (SR) est réservé dans le véhicule sur rails pour un usager, et
sachant qu'au moins une zone d'embarquement (ZE) appropriée est associée au siège (SR) réservé,
sachant que l'appareil mobile (AM) de l'usager comprend un moyen de délivrance pour au moins une information de navigation (IN),
sachant
- que l'appareil mobile (AM) est configuré afin d'installer sur l'appareil mobile (AM) un service local servant à délivrer des informations de navigation (IN) et afin de localiser de manière répétée l'appareil mobile (AM) dans le secteur du quai (QU), et
- que le service central est configuré afin de déterminer une zone d'embarquement (ZE) appropriée respectivement à partir de la position de l'appareil mobile (AM) et de la position de stationnement réelle d'un wagon du véhicule sur rails (VSR) avec le siège réservé de telle manière qu'un accès au véhicule sur rails (VSR) le plus à proximité du siège (SR) réservé se trouvera dans le secteur de la zone d'embarquement (ZE) appropriée, afin de calculer une information de navigation (IN) menant à la zone d'embarquement (ZE) appropriée à l'attention de l'usager et afin de la transmettre à l'appareil mobile (AM),
et que l'appareil mobile (AM) est configuré de telle sorte qu'il délivre l'information de navigation (IN).

8. Système selon la revendication 7,
sachant que l'appareil mobile (AM) comprend un dispositif de communication sans fil servant à échanger des données avec au moins une station de base radio.

9. Système selon la revendication 7 ou 8,
sachant qu'un système radio à courtes distances est prévu pour la localisation.

10. Système selon l'une quelconque des revendications 7 à 9,
sachant que l'appareil mobile (AM) est configuré pour procéder à des envois qui peuvent être détectés au niveau au moins de deux stations de base radio installées à des emplacements différents.

11. Système selon la revendication 10,
sachant que l'appareil mobile (AM) est configuré afin de procéder de manière régulière et de manière autonome aux envois.

12. Système selon la revendication 10,
sachant que l'appareil mobile (AM) est configuré pour procéder, à réception d'un paquet de données de test, à l'envoi d'un accusé de réception.

13. Système selon l'une quelconque des revendications 7 à 12,
sachant que l'appareil mobile (AM) est un téléphone mobile ou un ordinateur portable, qui est configuré afin d'échanger des données par communication radio.

14. Système selon l'une quelconque des revendications 7 à 13,
sachant que le protocole SIP est prévu en vue de la réception des informations de navigation (IN) destinées à l'appareil mobile (AM), sachant que, du fait de la configuration du service local sur l'appareil mobile (AM), celui-ci est équipé d'une extension de protocole SIP afin de délivrer les informations de navigation (IN).

15. Système selon l'une quelconque des revendications 7 à 14,
sachant que le quai (QU) et un symbole de la position propre sont affichés de manière schématique sur un écran de l'appareil mobile (AM), sachant que les informations de navigation (IN) proposent respectivement une direction de déplacement en lien avec le site (E) représenté.
